# EUROPEAN PATENT SPECIFICATION

(11) **EP 2 927 451 B1**
(45) Date of publication and mention of the grant of the patent: **14.06.2017**
(21) Application number: 14163101.0
(22) Date of filing: 01.04.2014
(51) Int. Cl.: F01N 3/20, B01D 53/94, B01D 53/58

(54) **Supply system for use in a vehicle**
Versorgungssystem zur Verwendung in einem Fahrzeug
Système d'alimentation destiné à être utilisé dans un véhicule

(43) Date of publication of application: 07.10.2015
(73) Proprietor: Inergy Automotive Systems Research (Société Anonyme), 1120 Bruxelles (BE)
(72) Inventor: Dougnier, François, 3190 Boortmeerbeek (BE); Van Schaftingen, Jules-Joseph, 1300 Wavre (BE)
(74) Representative: Remy, Vincent Noel Paul

(56) References cited:
- EP-A1- 2 333 262
- WO-A1-2013/144863
- US-A- 4 163 648
- US-A1- 2011 311 429

## Description

### Field of Invention

The invention relates to a system for injecting an ammonia rich fraction in a component on-board a vehicle, in particular an exhaust line or a fuel cell aboard a vehicle. Also the invention relates to the use of such a system in a vehicle.

### Background

There exist prior art systems for supplying ammonia or ammonia precursor to an exhaust line of a vehicle in order to reduce the NOx emissions. A SCR (Selective Catalytic Reduction) process is used for converting nitrogen oxides of an exhaust gas coming from a vehicle engine into diatomic nitrogen and water.

When the exhaust line is not sufficiently warm, solid components and deposits are formed in the exhaust pipe because of the presence of the carbon dioxide. This is especially the case after start-up of the vehicle, forcing the control system to delay the first injection of the reducing agent containing carbon dioxide, leading to relatively poor performances as regards reduction of nitrogen oxides. In particular this is detrimental to the performances reached in certification conditions. Also, such deposits may cause fouling or clogging of the injection module.

More generally, for different components of a vehicle it may be desirable to obtain and use a mixture (i.e. fraction) containing ammonia without hindering the performance of those components.

Prior art European Patent Application 2 333 262 A1 discloses a method of treating exhaust gas pollutants of an internal combustion engine. Thereto, an aqueous urea solution is decomposed into a mixture of at least an ammonia-containing reducing agent in the gas phase and another reducing agent. The ammonia-containing reducing agent is introduced into exhaust gas stream upstream of a reduction catalyst.

### Summary

The object of embodiments of the invention is to provide a system for injecting an ammonia rich fraction in a component on -board a vehicle, having a subsystem that is capable of providing an ammonia fraction in a form that is more suitable for use in components on-board a vehicle, such as in an exhaust line or a fuel cell. Particular embodiments aim to provide an improved supply system which allows reducing or eliminating solid deposits.

According to a first aspect of the invention there is provided a system for injecting an ammonia rich fraction in a component on-board a vehicle. The system comprises an urea decomposition unit and a subsystem mountable on-board a vehicle. The subsystem is configured for receiving a mixture being generated on-board the vehicle and comprising ammonia, carbon dioxide and water; and for generating from said mixture an ammonia rich fraction and a carbon dioxide rich fraction. The ammonia rich fraction contains a smaller weight percentage of carbon dioxide than the mixture and the carbon dioxide rich fraction contains a smaller weight percentage of ammonia than said mixture. The system further comprises an ammonia injecting module for injecting or spraying said ammonia rich fraction into the component at a first location.

The component may be e.g. an exhaust line, a fuel cell, a component such as an internal combustion engine. A fuel cell in which embodiments of the invention may be used is disclosed e.g. in patent application PCT/EP2013/077851 filed on 20 December 2013 in the name of the Applicant.

Note that the mixture and the resulting ammonia rich fraction and carbon dioxide rich fraction may comprise other compounds than ammonia (hydrated ammonia / ammonium hydroxide), water and carbon dioxide, such as impurities or other effluents. E.g. if the mixture is obtained by decomposition of an aqueous urea solution then it may also comprise a residue of an ammonia precursor (e.g. a portion of the ammonia precursor that has not been decomposed) and other compositions, such as ammonium hydrogen carbonate.

Such a system has the advantage that the system can be used at lower temperatures without the risk of deposits in the component, and that the concentration of ammonia in the injected fraction is higher compared to prior art systems, and that the carbon dioxide rich fraction can be used at a location different from the first location e.g. where there is no risk or a reduced risk of causing solid deposits. The carbon dioxide rich fraction could be e.g. eliminated as a gas.

In a preferred embodiment where the component is an exhaust line, the system further comprises a selective catalytic reduction (SCR) unit configured for converting nitrogen oxides of an exhaust gas in the exhaust line into diatomic nitrogen and water, using a catalyst. The ammonia injection module may then be arranged for injecting the ammonia rich fraction into the exhaust line upstream of the selective catalytic reduction (SCR) unit.

Preferably the system further comprises a carbon dioxide injecting module for injecting the carbon dioxide rich fraction into the exhaust line at a second location. The second location may be upstream or downstream of said first location. By choosing a second location upstream of said first location the temperature of the exhaust line will be typically higher because it is located closer to the engine, so that the risk on deposits is reduced. If water is present in CO2-rich fraction, this will also be injected closer to the engine, resulting in faster evaporation due to the higher temperature at this location versus the first location.

In an exemplary embodiment the system may further comprise a carbon dioxide buffer for storing the carbon dioxide rich fraction, said buffer being arranged between the subsystem and the carbon dioxide injection module. In that way it will be possible to inject the carbon dioxide rich fraction at a suitable moment in time. In this case, the carbon dioxide rich fraction could be injected downstream of the NH3 rich fraction. To control the timing there may be provided a control unit for controlling the carbon dioxide injection module. The control unit may be configured e.g. for operating said injection module when the temperature of the exhaust line is higher than a predetermined threshold temperature.

In a preferred embodiment the system further comprises a diesel oxidation catalyst (DOC) unit configured to promote oxidation of exhaust gas components by oxygen, wherein the ammonia injection module is arranged for injecting the ammonia rich fraction into the exhaust line downstream of the diesel oxidation catalyst (DOC) unit. In an exemplary embodiment the second location where the carbon dioxide rich fraction is introduced may be located upstream of the diesel oxidation catalyst (DOC) unit.

The subsystem may be configured for separating CO2 from the mixture by heating and pressurizing the mixture so that the partial pressure of CO2 in the vapours above liquid effluents is larger than 50% of the total pressure. In that way the CO2-rich fraction can be eliminated to the exhaust line. The separation of ternary mixtures NH3-CO2-H2O are known in industrial installations, as disclosed among others in US 3,112,177, US 4,060,591, and US 4,163,648, which are included herein by reference.

In an exemplary embodiment the subsystem comprises a separating unit configured for separating a mixture comprising ammonia, carbon dioxide and water into a first ammonia rich fraction and a carbon dioxide rich fraction; said first ammonia rich fraction containing a smaller weight percentage of carbon dioxide than said mixture and said carbon dioxide rich fraction containing a smaller weight percentage of ammonia than said mixture; and a drying unit configured for drying said first ammonia rich fraction in order to obtain a second ammonia rich fraction, typically a gaseous fraction; said second ammonia rich fraction containing a smaller weight percentage of water than said first ammonia rich fraction. The ammonia injection module may then be arranged for injecting said second ammonia rich fraction in the exhaust line.

Preferably the drying unit is configured to remove water from the first ammonia-rich fraction, by heating and/or pressurizing this fraction at a pressure lower than the pressure used in the separating unit.

Optionally the system may further comprise an ammonia buffer for storing the ammonia rich fraction, said buffer being arranged between the subsystem and the ammonia injection module. More preferably, in the embodiment with drying unit, the buffer is arranged between the drying unit and the ammonia injection module. Removal of water from the first NH3-rich fraction will avoid degradation of absorbing salts that may be used in the buffer for storing the second dried NH3-rich fraction, and may further increase the concentration and reactivity of the NH3-rich fraction in the exhaust pipe.

In an exemplary embodiment the system comprises a urea decomposition section configured for converting a urea solution into a mixture comprising ammonia, CO2 and water; wherein an outlet of said urea decomposition unit is in fluid communication with the subsystem for providing said mixture to the subsystem. Further there may be provided a tank for storing the urea solution, said tank being in fluid communication with an inlet of the urea decomposition section. Optionally, there may be arranged a pump in a line connecting the subsystem and the urea decomposition unit.

In an embodiment, there may be provided a tank storing an ammonia precursor, such as for instance urea or a concentrated urea solution of at least 10% urea up to the eutectic 32.5 wt% urea in water. The tank is connected with an ammonia precursor decomposition unit for generating a mixture comprising ammonia, carbon dioxide, water, and possibly other products such as CO2 derivatives such as ammonium bicarbonate. In one particular embodiment, the ammonia precursor may be a liquid ammonia precursor; in particular it can be a solution. In another particular embodiment, the ammonia precursor may be a solid.

In an embodiment there is provided a tank for storing a mixture resulting from the decomposition of the ammonia precursor. Such a mixture comprises water and ammonia (hydrated or in the form of an ammonium hydroxide), as well as effluents resulting from the decomposition of the ammonia precursor, said effluents comprising carbon dioxide, a residue of ammonia precursor (i.e. portion of ammonia precursor that has not been decomposed) and possibly other compositions, such as ammonium hydrogen carbonate. In the particular case where the ammonia precursor is an ammonia precursor solution, the advantage of using a mixture resulting from the decomposition of the ammonia precursor, is that such a mixture remains available and active (i.e. ready to be metered in the exhaust gases) at temperatures at which the ammonia precursor solution is not available (generally because it is frozen).

In a possible embodiment the subsystem comprises a thermo-hydraulic section configured for generating a temperature difference between a first portion and a second portion of said thermo-hydraulic section, said temperature difference being capable of causing evaporation of said mixture in said first portion and of causing condensation of said mixture in said second portion such that an oscillating flow is generated between said first portion and said second portion, said second portion being connected with the ammonia injection module. Preferably, the first portion is connected to the carbon dioxide injection module, e.g. through a gas release valve. Note that this is an exemplary embodiment and that many other variants of the subsystem are possible within the context of the invention, such as subsystems including a plurality of heating and pressurizing stages.

In an exemplary embodiment the system comprises a supply line to the thermo-hydraulic section and a valve arranged in the supply line. The valve is configured for blocking a flow from the thermo-hydraulic section back to the supply line whilst allowing a flow to the thermo-hydraulic section.

The thermo-hydraulic section may comprise any one or more of the following components for heating the first portion: exhaust line, engine block, engine cooling system, fuel cell cooling system; and/or any one or more of the following components for cooling the second portion: a cooling component using air from the environment, air conditioning system.

According to another exemplary embodiment of the system, the component is a power generator such as a fuel cell, and the power generator is arranged for generating power using said ammonia rich fraction.

According to a second aspect, the invention relates to the use of a subsystem or system according to any one of the embodiments above in a vehicle.

In a possible embodiment the subsystem comprises a thermo-hydraulic section configured for generating a temperature difference between a first portion and a second portion of said thermo-hydraulic section, said temperature difference being capable of causing evaporation of said mixture in said first portion and of causing condensation of said mixture in said second portion such that an oscillating flow is generated between said first portion and said second portion.

In a preferred embodiment the subsystem is configured for separating the mixture using at least one step of separating the CO2-rich fraction at pressures larger than 1.5 bar (abs.). The CO2-rich (and NH3-poor) fraction may be sent to the exhaust pipe upstream the SCR or SCRF catalyst unit, upstream or downstream of the DOC unit.

Embodiments of the invention offer the possibility of working with an ammonia rich fraction having a higher concentration in ammonia giving more reactivity to the NOx reduction due to the fact that less heat is consumed for water evaporation whilst operating at lower temperatures without the risk of residues/solid deposits, so enabling a better NOx reduction performance. Further the CO2-rich fraction, optionally including water, may be eliminated without causing solid deposits, and injection can be delayed whenever temperature of the exhaust is too low and conditions are critical as regards depollution performances. Further, when the CO2-rich fraction (NH3-poor) is injected downstream of the DOC unit, the residual NH3 is usable by SCR catalyst ensuring a lower consumption of NH3. As this residue is typically small, disturbance of dosing is minor. When the CO2-rich fraction (NH3-poor) is injected before the DOC unit, the residual NH3 are eliminated in the DOC unit (converted to NOx).

The features set out above for the first aspect of the invention may also be applied to the other aspects.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a diagram illustrating a first embodiment of a system for injecting ammonia in an exhaust line;
Figure 2 is a diagram illustrating a second embodiment of a system for injecting ammonia in an exhaust line;
Figure 3 is a diagram illustrating a third embodiment of a system for injecting ammonia in an exhaust line;
Figure 4 is a diagram illustrating a fourth embodiment of a system for injecting ammonia in an exhaust line;
Figure 5 is a diagram illustrating a fifth embodiment of a system for injecting ammonia in an exhaust line;
Figure 6 illustrates an embodiment of a subsystem; and
Figure 7 illustrates a further developed embodiment of a system for injecting ammonia in an exhaust line;
Figure 8 illustrates an embodiment of a system for injecting ammonia in a fuel cell.

### Description of embodiments

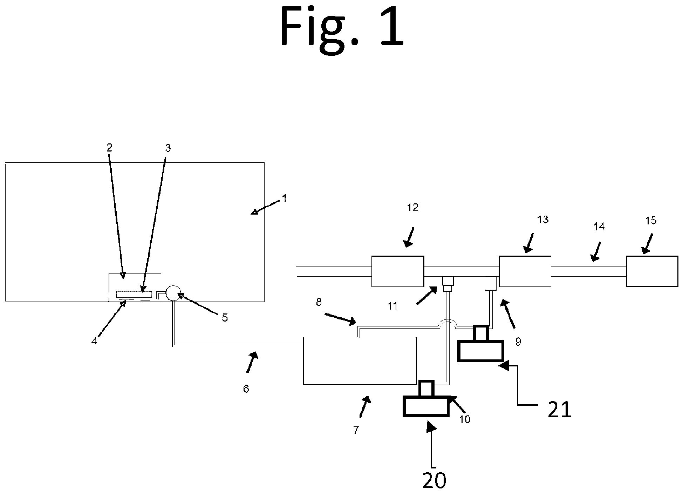

Figure 1 illustrates a first embodiment of a system for supplying ammonia in exhaust gasses. The system is aimed at providing ammonia for the NOₓ removal from the gasses in an exhaust line 14 coming from a vehicle engine 15. The system of figure 1 uses a SCR (Selective Catalytic Reduction) process for converting nitrogen oxides of an exhaust gas in the exhaust line into diatomic nitrogen and water, using a catalyst through a selective catalytic reduction (SCR) unit 12 arranged in the exhaust line 14.

The system comprises a tank 1 filled with the urea solution, for example a commercially available AdBlue® solution containing 32.5 weight % urea. The tank 1 is preferentially made of a plastic polymer, for example high density polyethylene, molded through an injection or blow-molding process. There is provided a urea decomposition unit 2 for converting the urea solution in the tank into a solution comprising ammonia, carbon dioxide and water. The urea decomposition unit may be integrated in tank 1 or may be provided outside tank 1. Fluidic communication between tank 1 and urea decomposition unit 2 is achieved through inlet 2a. The urea decomposition unit 2 may be a unit using for example a bio-agent 3 (preferentially an enzyme, urease) to obtain an NH3/CO2 mixture which may be an aqueous solution which may be a liquid and/or a liquid with particles in suspension. The bio-agent may be thermally activated by a heater 4. Such an example of a urea decomposition unit is disclosed in patent applications EP 13182919.4 and EP 12199278.8 in the name of the Applicant, the contents of which are included herein by reference. In those applications the Applicant has proposed two new methods for generating ammonia on board a vehicle (passenger car, truck, etc.) based on a biological catalysis. Biological catalysis comprises all forms of catalysis in which the activating species (i.e. biological catalysts) is a biological entity or a combination of such. Included among these are enzymes, subcellular organelles, whole cells and multicellular organisms. More precisely, according to a first method, a protein component is used to catalyze the hydrolysis (i.e. decomposition) of an ammonia precursor solution (for example, urea) into a mixture comprising at least ammonia, carbon dioxide and water. Such first method is described in more detail in patent application EP 13182919.4. According to a second method proposed by the Applicant, a protein component is used to catalyse the hydrolysis (i.e. decomposition) of an ammonia precursor solution (for example, urea) into ammonia gas. For example, the generated ammonia gas can be directed (i.e. transmitted) to a solid absorbing matrix where it is stored thereon by sorption. Such second method is described in more detail in patent application EP 12199278.8.

The NH3/CO2 aqueous mixture is further drawn to a subsystem in the form of a separating section 7 through a line 6 coming from the urea decomposition unit 2, e.g. by running an optional pump 5 or simply by gravity. The subsystem or separating section 7 is configured for separating the mixture comprising ammonia, carbon dioxide and water into an ammonia rich fraction and a carbon dioxide rich fraction. The ammonia rich fraction contains typically very little carbon dioxide and the carbon dioxide rich fraction contains typically the major part of the carbon dioxide from the mixture. The subsystem 7 may be heated and pressurized so that a CO2-rich stream is separated from a NH3-rich solution, and may be designed with one or more separation stages.

The NH3-rich solution is sprayed in the vehicle exhaust line 14 through an ammonia injector 11 which is positioned at a first location, upstream from the SCR unit 12. The ammonia injector 11 is configured for injecting the ammonia rich fraction into the exhaust line 14.

The CO2-rich fraction is introduced in the exhaust line 14, downstream from a DOC (Diesel Oxidation Catalyst) unit 13 through an injection module 9, e.g. in the form of a jet, via a line 8 between the subsystem 7 and the exhaust line 14. The carbon dioxide injecting module 9 is configured for injecting the carbon dioxide rich fraction into the exhaust line 14 at a second location. The second location is upstream of the first location where the NH3-rich fraction is injected. The diesel oxidation catalyst (DOC) unit 13 is configured to promote oxidation of exhaust gas components by oxygen. The diesel oxidation catalyst (DOC) is configured to promote oxidation of several exhaust gas components by oxygen, which is present in sufficient quantities in diesel exhaust gasses. When passed over an oxidation catalyst, certain diesel pollutants in the exhaust gasses can be oxidized to harmless products. By choosing a second location upstream of said first location the temperature of the exhaust line will be typically higher because it is located closer to the engine, so that the risk on deposits is reduced or eliminated.

Optionally there may be provided a buffer 20 for storing the ammonia rich fraction before being injected into the exhaust gasses, and/or a buffer 21 for storing the carbon dioxide rich fraction before being injected in the exhaust gasses.

The entire system may be controlled by an electronic unit (not shown in figure 1). The electronic unit may be configured to operate the ammonia injection module 11 and/or the carbon dioxide injection module 9 at particular moments in time. Preferably the carbon dioxide injection module 9 only injects when the exhaust line 14 is at a sufficiently high temperature in order to avoid deposits.

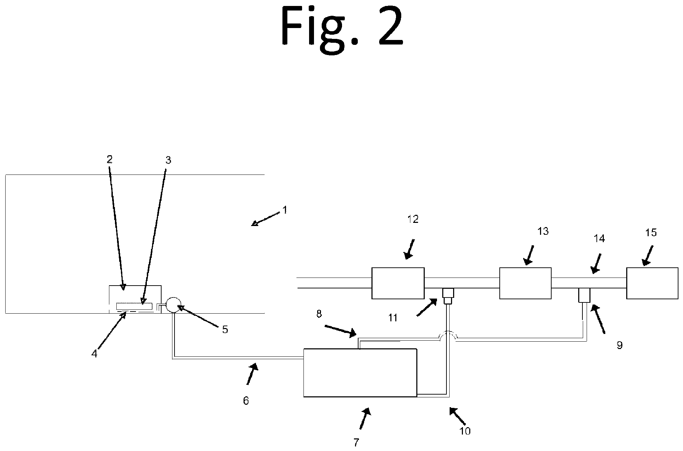

Figure 2 illustrates a second exemplary embodiment in which similar components have been indicated with the same reference numerals. This embodiment is similar to the first embodiment with this difference that the injection module 9, typically a jet, for injecting carbon dioxide in the exhaust line 14 is located in a second location, upstream of the diesel oxidation catalyst (DOC) unit 13, so that the CO2-reach stream is introduced upstream from the DOC unit 13. In that way the carbon dioxide rich fraction is injected closer to the engine 15 where higher temperatures are available and solid deposits can be easily avoided. Also, if water is present in the carbon dioxide rich fraction, this water will evaporate more easily in view of the higher temperature closer to the engine.

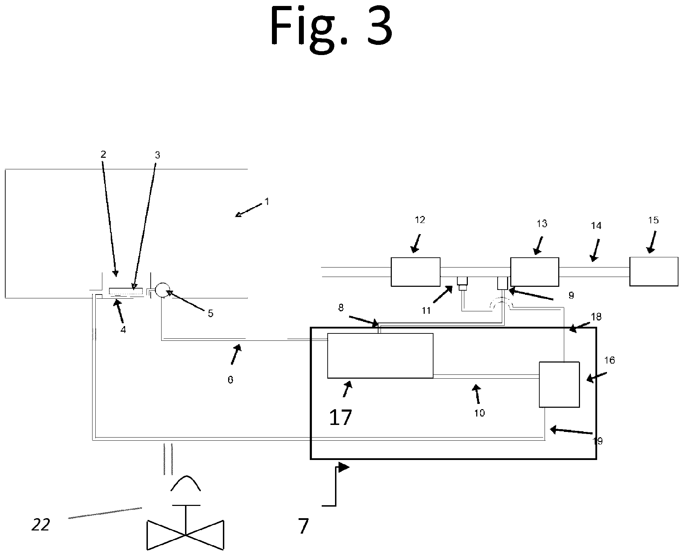

Figure 3 illustrated a third exemplary embodiment in which similar components have been indicated with the same reference numerals. In the third embodiment the subsystem 7 comprises a separating unit 17 and a drying unit 16. The separating unit 17 is configured for separating the solution comprising ammonia, carbon dioxide and water into a first ammonia rich fraction and a carbon dioxide rich fraction; and the drying unit 16 is configured for drying said first ammonia rich fraction in order to obtain a second dried ammonia rich fraction, typically a gas fraction; said second ammonia rich fraction containing a smaller weight percentage of water than said first ammonia rich fraction. The ammonia injection module 11 is arranged for injecting said second ammonia rich fraction in the exhaust line 14.

The water extracted from the first ammonia rich fraction flows back to the urea decomposition unit 2 through line 19, to further dilute the ammonia precursor coming from tank 1. If the urea decomposition unit 2 uses an enzyme, the returned water may further promote the enzymatic activity. In another non-illustrated variant, the line 19 may be connected to the tank 1, so that the water flow is used to dilute the content of tank 1. Further, there may be provided a drainage valve 22 to avoid that too much water is returned to the tank 1 or to the urea decomposition unit 2.

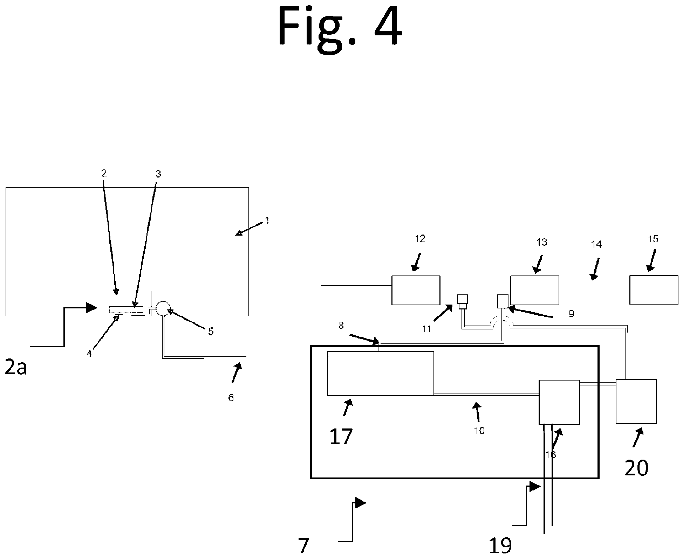

Figure 4 illustrates a fourth exemplary embodiment in which similar components have been indicated with the same reference numerals. The fourth embodiment is similar to the third embodiment with this difference that the second dried ammonia rich fraction, typically a gaseous fraction is absorbed in an absorbing/desorbing unit 20 which functions as a buffer which is able to provide the second dried ammonia rich fraction to the injector 11 for SCR purposes. The water flow resulting from the drying of the first ammonia rich fraction in the drying unit 16 may be drained via line 19. Optionally line 19 may be connected to tank 1 or to the decomposition unit 2, as described above in connection with figure 3.

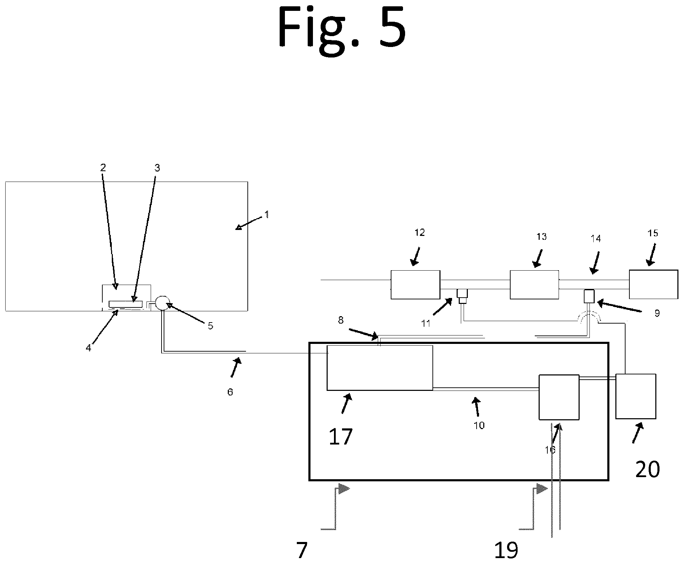

Figure 5 illustrates a fifth exemplary embodiment in which similar components have been indicated with the same reference numerals. The fifth embodiment is similar to the fourth embodiment with this difference that the injection module 9 for injecting the CO2-rich stream is now arranged between the outlet of engine 15 and the inlet of DOC unit 13.

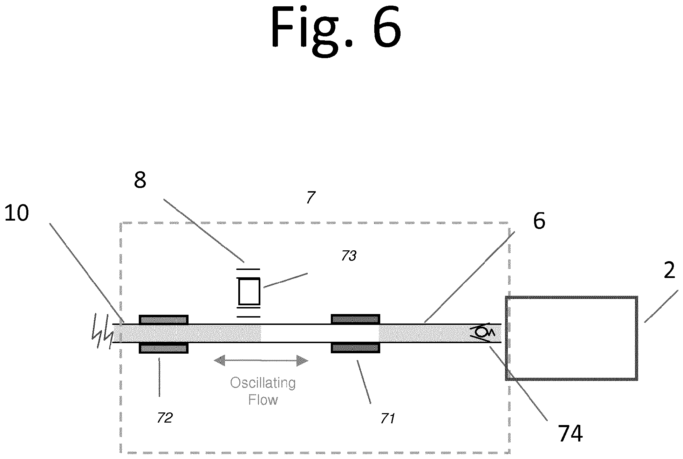

Figure 6 illustrates a possible implementation of a subsystem 7 in the form of a thermo-hydraulic section configured for generating a temperature difference between a first portion and a second portion of said thermo-hydraulic section, said temperature difference being capable of causing evaporation in said first portion and of causing condensation in said second portion such that an oscillating flow is generated between said first portion and said second portion. A thermo-hydraulic oscillation is obtained by causing an oscillating flow due to the action of the thermo-hydraulic unit comprising a heating device 71 and a cooling device 72. The heating device 71 can be e.g. the exhaust line, the internal combustion engine itself, a derivation or the main stream of the cooling circuit of the internal combustion engine, etc. Preferably, the heating device 71 is a component that heats up and needs to be cooled, or a component from which heat may be removed advantageously. The cooling device 72 of the thermo-hydraulic unit can be e.g. the environment, or a derivation or the main stream of an air conditioning system. The cooling device 72 may further comprise known heat transfer devices and thermo-insulating materials to enhance the cooling. In the subsystem 7 successive vaporisation and condensation occurs in the heating and cooling devices 71, 72, causing the oscillating flow. The fluid vaporizing in the heating device 71 may be forced to flow towards the cooling device 72 due to the presence of a check valve 74 in line 6, between the urea decomposition unit 2 and the subsystem 7. The check valve 74 is configured for blocking the flow from the subsystem 7 back to the urea decomposition unit 2, whilst allowing a flow from the urea decomposition unit 2 to the subsystem 7. The vaporization due to the presence of the heating device 71 will also pressurize the fluid in line 10. The fluid condenses in the cooling device 72 generating a relative vacuum at the heating device 71, so that fluid from the urea decomposition unit 2 is sucked again in the subsystem 7. Typically the fluid entering the subsystem 7 is a NH₃/CO₂ aqueous mixture. When the mixture is heated, the CO₂ escapes through the gas release valve 73, to line 8 which may be connected to an exhaust line as in previous embodiments. The gas release valve 73 is configured such that only gas can escape, and no liquid can escape. In addition, neither gas nor liquid can enter the subsystem 7 through the release valve 73. The liquid phase which is transferred to the exhaust line is the NH₃-rich fraction. In a further developed (not illustrated) embodiment the subsystem 7 could function both as a separator stage and as a pumping stage because of the presence of the check valve 74, so that pump 5 may be omitted in the embodiments of figures 1-5.

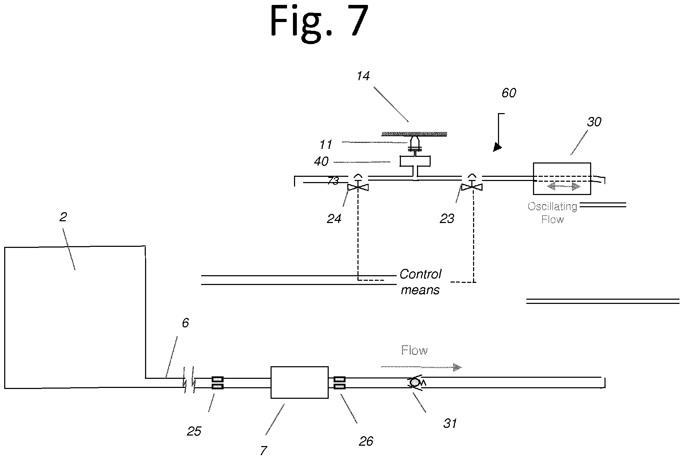

Figure 7 illustrates a further developed embodiment of a system of the invention. The system comprises a tank 1 and a loop circuit 60 which are connected through a connecting tube 6. The connecting tube 6 is provided with an orifice valve 25, and the loop circuit 30 is provided with an orifice valve 26, a check valve 31, a thermo-hydraulic unit 30, and a buffer 40 between two control valves 23, 24. An injector 11 is connected to the buffer 40 for injecting fluid into an exhaust line 14. Further, there may be provided control means configured for controlling the positions of control valves 23, 24. A subsystem 7 is added between the connecting tube 6 and the loop circuit 60. The fluid delivered by the buffer 2 is a NH₃/CO₂ aqueous mixture . The subsystem 7 is configured to extract a CO₂-rich stream from a NH₃-rich solution. The CO₂-rich stream is eliminated, e.g. sent to an injector for injecting the CO2-rich fraction into the exhaust line 14 at a second location upstream of injector 11, and the NH₃-rich solution constitutes the fluid flow of the loop circuit 60. The subsystem 7 can be placed at the intersection of the main flow line and the return line as in figure 7, or can be located on the main flow line before the return line, i.e. in the connecting tube 6 (not illustrated), or after the return line, i.e. between the intersection and the thermo-hydraulic unit 30 (not illustrated). Alternatively, the subsystem 7 can be combined in the thermo-hydraulic unit 30 similarly to the configuration of figure 6.

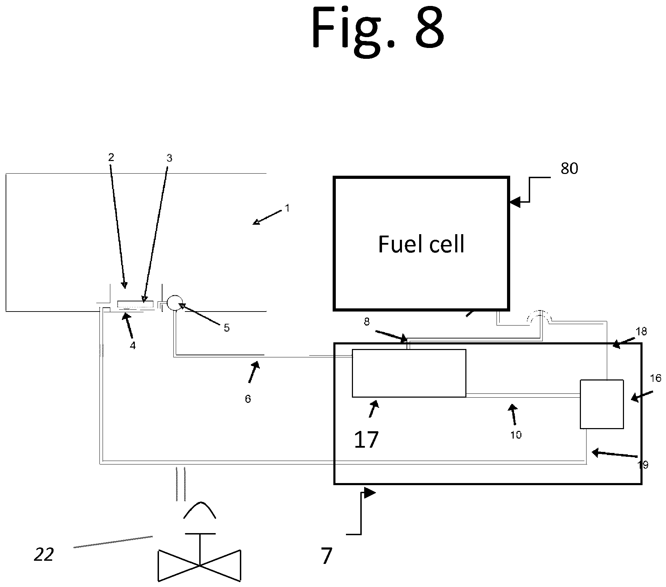

Figure 8 illustrated a further exemplary embodiment in which similar components have been indicated with the same reference numerals. The system of figure 8 injects an ammonia rich fraction in a fuel cell 80. The subsystem 7 is identical to the subsystem of figure 3 and reference is made to the description of the subsystem of figure 3 above. The second dried ammonia rich fraction leaving the drying unit 16 is sent to the fuel cell 80 via line 18. The fuel cell is arranged for using the ammonia rich fraction to generate power, e.g. as described in patent application PCT/EP2013/077851 in the name of the Applicant. The carbon dioxide rich fraction may flow via line 8 to a different location.

As in the embodiment of figure 3 the water extracted from the first ammonia rich fraction flows back to the urea decomposition unit 2 through line 19, to further dilute the ammonia precursor coming from tank 1. In another non-illustrated variant, the line 19 may be connected to the tank 1, so that the water flow is used to dilute the content of tank 1. Further, there may be provided a drainage valve 22 to avoid that too much water is returned to the tank 1 or to the urea decomposition unit 2. In yet another non-illustrated variant the water flow may be drained as in the embodiment of figure 4.

Whilst the principles of the invention have been set out above in connection with specific embodiments, it is to be understood that this description is merely made by way of example and not as a limitation of the scope of protection which is determined by the appended claims.

## Claims

1. System for injecting an ammonia rich fraction in a component on-board a vehicle, comprising:
- an urea decomposition unit,
- a subsystem (7) mountable on-board a vehicle, said subsystem being configured for:
- receiving a mixture comprising ammonia, carbon dioxide and water;
**characterised in that** the subsystem being further configured for generating from said mixture an ammonia rich fraction and a carbon dioxide rich fraction; said ammonia rich fraction containing a smaller weight percentage of carbon dioxide than said mixture and said carbon dioxide rich fraction containing a smaller weight percentage of ammonia than said mixture;
and wherein an ammonia injecting module (11) being configured for injecting or spraying said ammonia rich fraction into the component at a first location is provided.

2. The system according to claim 1, wherein the subsystem is comprising:
- a separating unit (17) configured for separating the mixture comprising ammonia, carbon dioxide and water into a first ammonia rich fraction and a carbon dioxide rich fraction; said first ammonia rich fraction containing a smaller weight percentage of carbon dioxide than said mixture and said carbon dioxide rich fraction containing a smaller weight percentage of ammonia than said mixture;
- a drying unit (16) configured for drying said first ammonia rich fraction in order to obtain a second ammonia rich fraction; said second ammonia rich fraction containing a smaller weight percentage of water than said first ammonia rich fraction, and said second ammonia fraction forming the ammonia rich fraction generated by the subsystem.

3. The system of claim 1 or 2, wherein the subsystem is comprising a thermo-hydraulic section receiving the mixture and configured for generating a temperature difference between a first portion and a second portion of said thermo-hydraulic section, said temperature difference being capable of causing evaporation of said mixture in said first portion and of causing condensation of said mixture in said second portion such that an oscillating flow is generated between said first portion and said second portion, said second portion having an outlet for the generated ammonia rich fraction, and said first portion having an outlet for the carbon dioxide rich fraction.

4. The system of any one of the previous claims, wherein the subsystem is configured for separating carbon dioxide from the mixture by heating and pressurizing the mixture so that the partial pressure of carbon dioxide in the vapours above liquid effluents is larger than 50% of the total pressure, such that the carbon dioxide rich fraction can be eliminated.

5. The system according to any one of the previous claims, wherein the urea decomposition unit (2) is configured for converting a urea solution into a mixture comprising ammonia, carbon dioxide and water.

6. The system of claim 5, wherein said component is an exhaust line, further comprising a selective catalytic reduction (SCR) unit (12) configured for converting nitrogen oxides of an exhaust gas in the exhaust line into diatomic nitrogen and water, using a catalyst; the ammonia injection module being arranged for injecting the ammonia rich fraction into the exhaust line upstream of said selective catalytic reduction (SCR) unit.

7. The system of claim 5 or 6, wherein said component is an exhaust line, further comprising a carbon dioxide injecting module (9) for injecting the carbon dioxide rich fraction into the exhaust line at a second location, said second location being upstream of said first location.

8. The system of claim 7, further comprising a carbon dioxide buffer (21) for storing the carbon dioxide rich fraction, said buffer (21) being arranged between the subsystem (7) and the carbon dioxide injection module (9).

9. The system of any one of the claims 5-8, wherein said component is an exhaust line, further comprising a diesel oxidation catalyst (DOC) unit (13) configured to promote oxidation of exhaust gas components by oxygen, the ammonia injection module being arranged for injecting the ammonia rich fraction into the exhaust line downstream of the diesel oxidation catalyst (DOC) unit.

10. The system of claim 5 or 6, wherein the component is a power generator such as a fuel cell, said power generator being arranged for generating power using said ammonia rich fraction.

11. The system of any one of the claims 5-10, comprising the subsystem of claim 2, wherein the ammonia injection module (11) is arranged for injecting said second ammonia rich fraction in the component.

12. The system of any one of the claims 5-11, further comprising an ammonia buffer (20) for storing the ammonia rich fraction, said buffer being arranged between the subsystem (7) and the ammonia injection module (11).

13. The system of any one of the claims 5-12, further comprising a urea decomposition section (2) configured for converting a urea solution into a mixture comprising ammonia, CO2 and water; wherein an outlet of said urea decomposition unit is in fluid communication with the subsystem (7) for providing said mixture to the subsystem.

14. The system of claim 13, further comprising a tank (1) for storing an aqueous urea solution, said tank being in fluid communication with the urea decomposition section (2).

15. The system of claim 13 or 14, further comprising a pump (5) arranged in a line between the subsystem (7) and the urea decomposition unit.

## Patentansprüche

1. System zum Einspritzen eines ammoniakreichen Anteils in einer Komponente an Bord eines Fahrzeugs, das System umfassend:
- eine Harnstoff-Zersetzungseinheit;
- ein Subsystem (7), das an Bord eines Fahrzeugs montierbar ist, wobei das Subsystem konfiguriert ist für:
- ein Empfangen einer Mischung aus Ammoniak, Kohlendioxid und Wasser;
**dadurch gekennzeichnet, dass** das Subsystem weiter dazu konfiguriert ist:
- aus der Mischung eine ammoniakreiche Fraktion und eine kohlendioxidreiche Fraktion zu erzeugen; wobei die ammoniakreiche Fraktion einen kleineren Gewichtsprozentsatz an Kohlendioxid enthält als die Mischung und wobei die kohlendioxidreiche Fraktion einen kleineren Gewichtsprozentsatz von Ammoniak enthält als die Mischung; und
wobei ein Ammoniak Injektionsmodul (11) vorgesehen ist, welches konfiguriert ist für ein Injizieren oder für ein Sprühen der ammoniakreichen Fraktion in die Komponente an einem ersten Ort.

2. Das System nach Anspruch 1, wobei das Subsystem umfasst:
- eine Trenneinheit (17), die konfiguriert ist, zum Trennen der Mischung umfassend Ammoniak, Kohlendioxid und Wasser in eine erste ammoniakreiche Fraktion und eine kohlendioxidreiche Fraktion; wobei die erste ammoniakreiche Fraktion einen kleineren Gewichtsprozentsatz von Kohlendioxid enthält als die Mischung und wobei die kohlendioxidreiche Fraktion einen kleineren Gewichtsprozentanteil an Ammoniak als die Mischung enthält;
- eine Trocknungseinheit (16), die zum Trocknen der ersten ammoniakreichen Fraktion konfiguriert ist, um eine zweite ammoniakreiche Fraktion zu erhalten; wobei die zweite ammoniakreiche Fraktion einen kleineren Gewichtsprozentanteil an Wasser als die erste ammoniakreiche Fraktion enthält und wobei die zweite ammoniakreiche Fraktion die vom Subsystem erzeugte ammoniakreiche Fraktion darstellt.

3. Das System nach Anspruch 1 oder Anspruch 2, wobei das Subsystem einen thermohydraulischen Abschnitt umfasst, welcher die Mischung empfängt und welcher zur Erzeugung einer Temperaturdifferenz zwischen einem ersten Abschnitt und einem zweiten Abschnitt des thermohydraulischen Abschnitts ausgebildet ist, wobei die Temperaturdifferenz in der Lage ist, die Mischung in dem ersten Teil zu verdampfen und eine Kondensation in dem zweiten Abschnitt zu bewirken derart, dass ein oszillierender Strom zwischen dem ersten Abschnitt und dem zweiten Abschnitt erzeugt wird und, wobei der zweite Abschnitt einen Auslass für die ammoniakreiche Fraktion aufweist und der erste Teil einen Auslass für die kohlendioxidreiche Fraktion aufweist.

4. Das System nach einem der vorhergehenden Ansprüche, wobei das Subsystem konfiguriert ist für:
- Trennen von Kohlendioxid aus dem Gemisch durch ein Erhitzen und ein Unterdrucksetzen der Mischung, so dass der Partialdruck des Kohlendioxids in den Dämpfen oberhalb der flüssigen Ausflüsse größer als 50% des Gesamtdrucks ist, so dass die kohlendioxidreiche Fraktion eliminiert werden kann.

5. Das System nach einem der vorhergehenden Ansprüche, **dadurch gekennzeichnet, dass** die Harnstoff-Zersetzungseinheit (2) zur Umwandlung einer Harnstofflösung in eine Mischung aus Ammoniak, Kohlendioxid und Wasser konfiguriert ist.

6. System nach Anspruch 5, **dadurch gekennzeichnet, dass** die Komponente eine Abgasleitung ist, die ferner eine selektive katalytische Reduktionseinheit (SCR) umfasst, die zur Umwandlung von Stickoxiden eines Abgases in der Abgasleitung in zweiatomigen Stickstoff und Wasser unter Verwendung von einem Katalysator; wobei das Ammoniakinjektionsmodul zum Einspritzen der ammoniakreichen Fraktion in die Abgasleitung stromaufwärts der selektiven katalytischen Reduktionseinheit (SCR) angeordnet ist.

7. Das System nach Anspruch 5 oder Anspruch 6, wobei die Komponente eine Abgasleitung ist, die ferner ein Kohlendioxid-Injektionsmodul (9) zum Einspritzen der kohlendioxidreichen Fraktion in die Abgasleitung an einer zweiten Stelle umfasst, wobei die zweite Stelle stromaufwärts des ersten Ortes vorgesehen ist.

8. Das System nach Anspruch 7, **dadurch gekennzeichnet, dass** das System ferner einen Kohlendioxidpuffer (21) zur Speicherung des kohlendioxidreichen Anteils umfasst, wobei der Puffer (21) zwischen dem Subsystem (7) und dem Kohlendioxid-Injektionsmodul (9) angeordnet ist.

9. Das System nach einem der Ansprüche 5 bis 8, wobei die Komponente eine Abgasleitung ist, die ferner eine DieselOxidationskatalysator (DOC) Einheit (13) umfasst, die derart konfiguriert ist, dass sie die Oxidation von Abgaskomponenten durch Sauerstoff unterstützt, wobei das AmmoniakInjektionsmodul zum Einspritzen der ammoniakreichen Fraktion in die Abgasleitung stromabwärts der Dieseloxidationskatalysator (DOC) Einheit angeordnet ist.

10. Das System nach Anspruch 5 oder Anspruch 6, wobei die Komponente ein Stromerzeuger wie eine Brennstoffzelle ist, wobei der Leistungsgenerator zur Erzeugung von Energie unter Verwendung der ammoniakreichen Fraktion angeordnet ist.

11. Das System nach einem der Ansprüche 5 bis 10, wobei das System ferner das Subsystem nach Anspruch 2 umfasst, wobei das Ammoniak Injektionsmodul (11) zum Injizieren der zweiten ammoniakreichen Fraktion in die Komponente angeordnet ist.

12. Das System nach einem der Ansprüche 5 bis 11, ferner umfassend einen Ammoniakpuffer (20) zum Speichern der ammoniakreichen Fraktion, wobei der Puffer zwischen dem Subsystem (7) und dem Ammoniakinjektionsmodul (11) angeordnet ist.

13. Das System nach einem der Ansprüche 5 bis 12, **dadurch gekennzeichnet, dass** das System ferner einen Harnstoffzersetzungsabschnitt (2) aufweist, welcher dazu konfiguriert ist, um eine Harnstofflösung in eine Mischung aus Ammoniak, CO2 und Wasser zu wandeln; wobei ein Auslass der Harnstoff-Zersetzungseinheit in einer Fluidphasenaustauschender Verbindung mit dem Untersystem (7) steht, um die Mischung dem Subsystem zuzuführen.

14. Das System nach Anspruch 13, **dadurch gekennzeichnet, dass** das System ferner einen Tank (1) zum Speichern einer wässrigen Harnstofflösung umfasst, wobei der Tank in Fluidphasenaustauschender Verbindung mit dem Harnstoffzersetzungsabschnitt (2) steht.

15. Das System nach Anspruch 13 oder Anspruch 14, wobei das System ferner eine Pumpe (5) umfasst, die in einer Linie zwischen dem Subsystem (7) und der Harnstoffzersetzungseinheit angeordnet ist.

## Revendications

1. Système pour injecter une fraction riche en ammoniac dans un élément à bord d'un véhicule, comprenant :
- une unité de décomposition d'urée,
- un sous-système (7) pouvant être monté à bord d'un véhicule, ledit sous-système étant conçu pour :
- recevoir un mélange comprenant de l'ammoniac, du dioxyde de carbone et de l'eau ;
**caractérisé en ce que** le sous-système est en outre configuré pour produire à partir dudit mélange une fraction riche en ammoniac et une fraction riche en dioxyde de carbone ; ladite fraction riche en ammoniac contenant un plus petit pourcentage en poids de dioxyde de carbone que ledit mélange et ladite fraction riche en dioxyde de carbone contenant un plus petit pourcentage en poids d'ammoniac que ledit mélange ;
et dans lequel un module d'injection d'ammoniac (11) qui est configuré pour injecter ou pulvériser ladite fraction riche en ammoniac dans l'élément en un premier endroit est prévu.

2. Système selon la revendication 1, dans lequel le sous-système comprend :
- une unité de séparation (17) configurée pour séparer le mélange comprenant de l'ammoniac, du dioxyde de carbone et de l'eau dans une première fraction riche en ammoniac et une fraction riche en dioxyde de carbone ; ladite première fraction riche en ammoniac contenant un plus petit pourcentage en poids de dioxyde de carbone que ledit mélange et ladite fraction riche en dioxyde de carbone contenant un plus petit pourcentage en poids d'ammoniac que ledit mélange ;
- une unité de séchage (16) configurée pour sécher ladite première fraction riche en ammoniac afin d'obtenir une seconde fraction riche en ammoniac ; ladite seconde fraction riche en ammoniac contenant un plus petit pourcentage en poids d'eau que ladite première fraction riche en ammoniac et ladite seconde fraction d'ammoniac formant la fraction riche en ammoniac produite par le sous-système.

3. Système selon la revendication 1 ou 2, dans lequel le sous-système comprend une section thermo-hydraulique recevant le mélange et configurée pour produire une différence de température entre une première partie et une seconde partie de ladite section thermo-hydraulique, ladite différence de température étant capable de provoquer l'évaporation dudit mélange dans ladite première partie et de provoquer la condensation dudit mélange dans ladite seconde partie de façon telle qu'une circulation oscillante est produite entre ladite première partie et ladite seconde partie, ladite seconde partie ayant une sortie pour la fraction riche en ammoniac produite et ladite première partie ayant une sortie pour la fraction riche en dioxyde de carbone.

4. Système selon l'une quelconque des revendications précédentes, dans lequel le sous-système est configuré pour séparer du dioxyde de carbone du mélange par chauffage et mise sous pression du mélange pour que la pression partielle du dioxyde de carbone dans les vapeurs au-dessus des effluents liquides soit supérieure à 50 % de la pression totale, de façon telle que la fraction riche en dioxyde de carbone peut être éliminée.

5. Système selon l'une quelconque des revendications précédentes, dans lequel l'unité de décomposition d'urée (2) est configurée pour convertir une solution d'urée en un mélange comprenant de l'ammoniac, du dioxyde de carbone et de l'eau.

6. Système selon la revendication 5, dans lequel ledit élément est un tuyau d'échappement, comprenant en outre une unité de réduction catalytique sélective (SCR) (12) configurée pour convertir des oxydes d'azote d'un gaz d'échappement dans le tuyau d'échappement en azote diatomique et en eau, à l'aide d'un catalyseur ; le module d'injection d'ammoniac étant disposé pour injecter la fraction riche en ammoniac dans le tuyau d'échappement en amont de ladite unité de réduction catalytique sélective (SCR).

7. Système selon la revendication 5 ou 6, dans lequel ledit élément est un tuyau d'échappement, comprenant en outre un module d'injection de dioxyde de carbone (9) pour injecter la fraction riche en dioxyde de carbone dans le tuyau d'échappement en un second endroit, ledit second endroit étant en amont dudit premier endroit.

8. Système selon la revendication 7, comprenant en outre un réservoir tampon de dioxyde de carbone (21) pour stocker la fraction riche en dioxyde de carbone, ledit réservoir tampon (21) étant disposé entre le sous-système (7) et le module d'injection de dioxyde de carbone (9).

9. Système selon l'une quelconque des revendications 5-8, dans lequel ledit élément est un tuyau d'échappement, comprenant en outre une unité catalyseur d'oxydation diesel (DOC) (13) configurée pour favoriser l'oxydation de constituants de gaz d'échappement par de l'oxygène, le module d'injection d'ammoniac étant disposé pour injecter la fraction riche en ammoniac dans le tuyau d'échappement en aval de l'unité catalyseur d'oxydation diesel (DOC) .

10. Système selon la revendication 5 ou 6, dans lequel l'élément est un générateur d'énergie électrique tel qu'une pile à combustible, ledit générateur d'énergie électrique étant disposé pour produire de l'énergie électrique à l'aide de ladite fraction riche en ammoniac.

11. Système selon l'une quelconque des revendications 5-10, comprenant le sous-système selon la revendication 2, dans lequel le module d'injection d'ammoniac (11) est disposé pour injecter ladite seconde fraction riche en ammoniac dans l'élément.

12. Système selon l'une quelconque des revendications 5-11, comprenant en outre un réservoir tampon d'ammoniac (20) pour stocker la fraction riche en ammoniac, ledit réservoir tampon étant disposé entre le sous-système (7) et le module d'injection d'ammoniac (11).

13. Système selon l'une quelconque des revendications 5-12, comprenant en outre une section de décomposition d'urée (2) configurée pour convertir une solution d'urée en un mélange comprenant de l'ammoniac, du CO₂ et de l'eau ; dans lequel une sortie de ladite unité de décomposition d'urée est en communication fluidique avec le sous-système (7) pour fournir ledit mélange au sous-système.

14. Système selon la revendication 13, comprenant en outre un réservoir (1) pour stocker une solution aqueuse d'urée, ledit réservoir étant en communication fluidique avec la section de décomposition d'urée (2).

15. Système selon la revendication 13 ou 14, comprenant en outre une pompe (5) disposée en ligne entre le sous-système (7) et l'unité de décomposition d'urée.
